## Europäisches Patentamt

## European Patent Office

## Office européen des brevets

(19)

(11) Veröffentlichungsnummer: **0 228 341**
**B1**

(12) # EUROPÄISCHE PATENTSCHRIFT

(45) Veröffentlichungstag der Patentschrift:
**11.07.90**

(51) Int. Cl.⁵: **H01H 3/62, F16N 9/04**

(21) Anmeldenummer: **86730200.2**

(22) Anmeldetag: **05.12.86**

(54) Hebelanordnung zur Übertragung begrenzter Schwenkbewegungen.

(30) Priorität: **13.12.85 DE 3544666**

(43) Veröffentlichungstag der Anmeldung:
**08.07.87 Patentblatt 87/28**

(45) Bekanntmachung des Hinweises auf die Patenterteilung:
**11.07.90 Patentblatt 90/28**

(84) Benannte Vertragsstaaten:
**DE FR GB IT SE**

(56) Entgegenhaltungen:
**DE-A- 2 311 265**
**FR-A- 2 182 539**
**US-A- 3 849 619**

**Die Dampflokomotive - Technik und Function -**
**Seiten 41-44**

(73) Patentinhaber: **Siemens Aktiengesellschaft,**
**Wittelsbacherplatz 2, D-8000 München 2(DE)**

(72) Erfinder: **Godesa, Ludvik, Eisenacher Strasse 115,**
**D-1000 Berlin 30(DE)**

ACTORUM AG

## Beschreibung

Die Erfindung befaßt sich mit einer gelenkigen Hebelanordnung zwischen der Antriebsvorrichtung eines Niederspannungs-Leistungsschalters und dessen Kontaktanordnung zur Übertragung begrenzter Schwenkbewegungen mit wechselnder Richtung, mit wenigstens einem Lagerbolzen und einem mit einer Lageröffnung für den Lagerbolzen versehenen Hebel.

Sofern die Kräfte in einem Leistungsschalter gering sind, genügen Teile von einfachster Ausgestaltung, um den vorgesehenen Zweck zu erfüllen. Sind dagegen die Kräfte größer und werden die Bewegungen mit sehr hoher Beschleunigung ausgeführt, so ist mit erheblichen mechanischen Problemen zu rechnen. Es bereitet daher Schwierigkeiten, auch bei stabiler und sorgfältiger Gestaltung der Teile den Verschleiß so gering zu halten, daß eine geforderte Anzahl von Arbeitsspielen möglich ist. Betroffen von diesem Problem sind beispielsweise in Niederspannungs-Leistungsschaltern etwa gemäß der US-A-3 301 984 oder 3 849 619 die Gelenkverbindung zwischen einem die Kraft eines Federspeichers übertragenden Schubhebel, einem auf einer Schaltwelle sitzenden Treibhebel und einem die Bewegung auf die Kontaktanordnung übertragenden Koppelorgan. An dieser Stelle wird nämlich bei mehrpoligen Leistungsschaltern nicht nur die zu dem einen Kontaktglied führende Betätigungsenergie weitergeleitet, sondern auch die Betätigungsenergie für weitere, mit der Schaltwelle verbundenen Kontaktglieder.

An sich sind in der mechanischen Technik vielfältige Gestaltungen und Bauelemente bekannt, die sich zur verschleißarmen und reibungsarmen Übertragung großer Kräfte auch unter ungünstigen Bedingungen eignen. Grundsätzlich erweist sich eine Schmierung ruckartig bewegter Hebelanordnungen jedoch als problematisch, weil die Schmiermittel aufgrund der konstruktiven Gegebenheiten nicht zu der gewünschten Wirkung gebracht werden können oder nicht ausreichend belastbar sind. Wählt man nämlich ölige Schmiermittel, so benetzen diese zwar aufgrund ihres Kriechverhaltens die Lagerflächen, schützen diese bei hoher spezifischer Beanspruchung aber nur unzureichend aufgrund der begrenzten Zähigkeit und Belastbarkeit des Schmiermittels. Außerdem besteht wegen der ruckartigen Bewegungen mit hoher Beschleunigung, wie sie in Leistungsschaltern auftreten, die Gefahr, daß ölige Schmiermittel von den zu schmierenden Teilen abgeschleudert werden und unerwünschte Verschmutzungen im Inneren des Leistungsschalters hervorrufen. Wählt man dagegen Schmiermittel mit fettartiger Beschaffenheit, d. h. mit größerer Zähigkeit, so sind diese für nur wenige Arbeitsspiele wirksam, da dann das Schmiermittel verdrängt und verbraucht ist und aufgrund seiner großen Zähigkeit nicht nachfließen kann.

Es ist bereits bekannt, bei Wälzlagern eine Ölschmierung anzuwenden, wobei das Öl unter der Wirkung der Fliehkraft aus einem speziellen Fett abgeschieden wird. Dabei wird innerhalb eines zentralen Teiles des Lagers ein Vorratsraum angeordnet, der über Bohrungen mit dem die Wälzkörper enthaltenden Raum in Verbindung steht. Im kontinuierlichen Betrieb wird nach und nach unter dem Einfluß der Fliehkraft Öl aus dem Spezialfett abgesondert und durch die Bohrungen den Wälzkörpern zugeführt. Eine solche Anordnung ist für die Hebelgelenke eines Niederspannungs-Leistungsschalters nicht geeignet, weil Wälzlager schon aus Gründen des Raumbedarfes nicht in Betracht kommen und, wie bereits erwähnt, die Gefahr einer inneren Verschmutzung des Schaltgerätes besteht (FR-A-2 182 539).

Hin- und hergehende Bewegungen, die zur Übertragung großer Kräfte dienen, sind auch beim Bau von Dampflokomotiven eingesetzt worden. Da es sich jedoch hier um fortgesetzte, d. h. periodisch wiederholte Bewegungen handelt, konnte man bei ausreichender Dimensionierung der Teile eine Ölschmierung mit Docht- oder Schleuderanordnungen wählen. Die Übertragung solcher Gelenkanordnungen auf einen Niederspannungs-Leistungsschalter scheidet gleichfalls aufgrund des Platzbedarfes aus.

Der Erfindung liegt ausgehend hiervon die Aufgabe zugrunde, eine Hebelanordnung der genannten Art trotz möglichst einfacher Ausgestaltung ihrer zusammenwirkenden Teile so auszubilden, daß der Verschleiß wesentlich vermindert und die Anzahl der möglichen Arbeitsspiele dementsprechend erhöht ist.

Diese Aufgabe wird dadurch gelöst, daß seitlich neben der Lageröffnung ein mit dem Lagerspalt zwischen dem Hebel und dem Lagerbolzen in Verbindung stehender Vorratsraum zur Aufnahme eines hochzähen Schmierstoffes angeordnet ist. Die seitliche Lage des Vorratsraumes kann dabei bezüglich der Schwenkachse der Anordnung sowohl radial als auch axial gewählt sein. Durch die Anbringung des Schmierstoffes in einem begrenzten Raum wird erreicht, daß der Schmierstoff durch die ruckartigen Beschleunigungen und Verzögerungen bei jedem Arbeitsspiel nicht frei entweichen kann, sondern vielmehr in den Lagerspalt auf derjenigen Seite gelangt, die bei der vorangegangenen Bewegung unbelastet war. Auf diese Weise steht nun der Schmierstoff dort bereit, wo er bei dem anschließenden Arbeitsspiel mit umgekehrter Bewegungsrichtung benötigt wird. Es hat sich erwiesen, daß Schmierstoffe mit so großer Zähigkeit verwendbar sind, daß sie bei normaler offener Anwendung zur Schmierung von Hebelanordnungen nicht geeignet wären. Aufgrund der neuen Anordnung gelangt jedoch der hochzähe Schmierstoff zur vollen Wirksamkeit und steigert die Lebensdauer von Hebelanordnungen der vorliegend betrachteten Art wesentlich.

Eine zweckmäßige Möglichkeit zur Bildung des Vorratsraumes besteht darin, eine den Lagerbolzen umgebende und an den Hebel angrenzende Buchse vorzusehen. Eine solche Buchse kann auch einfache Weise an dem Lagerbolzen abgestützt werden, indem die Bohrung der Buchse einen dem Durchmesser des Lagerbolzens angepaßten Teil sowie einen demgegenüber erweiterten Teil zur Aufnahme des Schmierstoffes erhält. In diesem Zusammenhang ist es vorteilhaft, die Buchse als Abstandsglied zwischen paarweise angeordneten Hebeln auszubilden. Hierbei erfüllt die Buchse eine doppelte Funktion, da sie einerseits die paarweise angeordneten Hebel gegeneinander abstützt und ihre Verkantung und Abstandänderung verhindert und dabei gleichzeitig den Schmiermittelvorrat aufnimmt.

Wie bereits erwähnt, treten die beschriebenen Schwierigkeiten beispielsweise bei Niederspannungs-Leistungsschaltern auf.

In solchen Geräten kann die Lebensdauer der am stärksten beanspruchten Teile dadurch verbessert werden, daß der Lagerbolzen als Verbindungselement zur Kraftübertragung zwischen Zwei auf einer Schaltwelle sitzenden Treibhebeln, zwei durch einen Federspeicher beaufschlagten Traghebeln eines Schubhebels und einem mit einer Kontaktanordnung des Leistungsschalter verbundenen Koppelorgan ausgebildet ist und daß die Buchse entsprechend dem Abstand der Teilhebel bemessen und diese an den Treibhebeln anliegend angeordnet sind. An dieser Stelle wird die volle Antriebsenergie für alle Kontaktglieder des Schalters übertragen. Daher ist der Energiefluß an dieser Stelle bei einem drei- oder vierpoligen Schalter außerordentlich hoch. Mit Rücksicht auf den geringen zur Verfügung stehenden Raum ist es andererseits nicht möglich, wie eingangs erläutert, aufwendige Gelenkkontruktionen mit großer Festigkeit und Haltbarkeit einzusetzen. Vielmehr können nur einfach gestaltete Gelenkanordnung eingesetzt werden, die glatte, zylindrische Bolzen und aus Stahlblech bestehende Laschen mit durch Stanzen oder Bohren hergestellten Lageröffnungen benutzt werden. Diese Lagerstelle erhält durch die Erfindung eine wesentlich gesteigerte Lebensdauer.

Wie bereits erwähnt, kann der Vorratsraum für das Schmiermittel sowohl radial als auch axial neben dem Lagerspalt angeordnet sein. Eine radial seitliche Anordnung kann insbesondere vorteilhaft durch eine in die Lageröffnung mündende Bohrung verwirklicht werden. Eine solche Bohrung kann bei einem Hebel mit zwei Lageröffnungen so angeordnet sein, daß die beide Lageröffnungen verbindet. Damit wird beiden Lageröffnungen bei abwechselnder Bewegung des Hebels in der Richtung der Verbindungslinie der Lageröffnungen Schmierstoff zugeführt. Ein Hebel dieser Art ist ebenfalls für elektrische Leistungsschalter geeignet, insbesondere im Bereich der Antriebsteile.

Wie bereits erwähnt, eignet sich die neue Hebelanordnung insbesondere zur Anwendung bei Niederspannungs-Leistungsschaltern in der Weise, daß die Buchse zwischen den Teilhebeln eines Schubhebels angeordnet ist. Um hierbei die beste Wirksamkeit zu erzielen, ist es erwünscht, daß die Buchse an den Teilhebeln möglichst spielfrei anliegt. Dies kann nach einer Ausgestaltung der Erfindung dadurch erreicht werden, daß die Buchse aus zwei Teilstücken besteht, die jeweils einen an die Teilhebel angrenzenden Vorratsraum besitzen und daß die Gesamtlänge beider Teilstücke zwecks maßgerechter Anpassung an den Abstand der Teilhebel durch Zwischenlage von Scheiben geringer als der Abstand der Teilhebel bemessen ist. Hierbei sind gleiche Teilstücke zur Bildung der Buchse verwendbar.

Der Einbau der Buchse in die Hebelanordnung kann gegenüber der soeben geschilderten Ausführungsform noch dadurch erleichtert werden, daß die Buchse aus zwei ineinandergreifend und relativ zueinander axial verschiebbaren Teilstücken zusammengesetzt ist und daß zwischen zwei einander gegenüberstehend angeordneten Ringflächen der Teilstücke wenigstens ein axial wirkendes Federelement angeordnet ist. Eine solche Buchse verhält sich bei der Montage wie eine gewöhnliche, einstückige Buchse, paßt sich jedoch aufgrund der Federung des Federelementes spielfrei an den Abstand der Teilhebel an.

Im wesentlichen die gleiche Eigenschaft der spielfreien Anpassung der Abstand der Teilhebel kann auch durch eine weitere Ausführungsform der Buchse erreicht werden, die ein Innenteil mit einer etwa mittig am Umfang vorgesehenen Eindrehung und ein über die eine Endfläche eines Innenteils der Buchse überstehendes Mantelteil besitzt, das einen radial bleibend deformierbaren Bereich besitzt. Ein solcher Bereich kann beispielsweise durch am Umfang verteilt ange ordnete Ausnehmungen gebildet sein, durch die der Querschnitt des Mantelstückes verringert ist.

Etwa die gleichen Eigenschaften wie die erwähnte, mit einem Federelement ausgestattete Ausführung der Buchse ist dadurch zu erreichen, daß die Buchse bei einstückiger Herstellung aus einem Kunststoff einen etwa mittig angeordneten axial federnd deformierbaren Bereich besitzt. Dies ist in bekannter Weise gleichfalls durch einen Bereich mit verringertem Querschnitt zu erreichen, etwa in der Weise, daß zwei oder mehrere in Umfangsrichtung verlaufende Arme als Verbindung der Endteile der Buchse gebildet werden. Zur Herstellung solcher Buchsen eignen sich insbesondere thermoplastische Kunststoffe.

Die Erfindung wird im folgenden anhand des in den Figuren dargestellten Ausführungsbeispieles näher erläutert.

Die Figur 1 zeigt einen Niederspannungs-Leistungsschalter in vereinfachter Darstellung im Schnitt.

Die Figur 2 zeigt als Einzelheit eine Schaltwelle des Leistungsschalters gemäß der Figur 1 mit angrenzenden Teilen einer gelenkigen Hebelanordnung.

Die Figur 3 zeigt eine Gelenkanordnung in vergrößerter Darstellung im Schnitt.

In der Figur 4 ist eine Einzelheit eine Hebelgelenkes zur Erläuterung der Bewegung eines Schmierstoffes dargestellt.

Die Figur 5 ist eine der Figur 3 entsprechende Darstellung mit einer ins zwei Teilstücke geteilten Buchse.

In der Figur 6 ist als Einzelteil in einem Schnitt eine zweiteilige, mit einer Federung versehene Buchse gezeigt.

Die Figur 7 zeigt gleichfalls als Einzelteil eine durch bleibende Verformung an den Abstand von Teilhebeln anpaßbare Buchse.

*Die Figur 8 zeigt eine als einstückiges Kunst-*
stoffteil hergestellte federnde Buchse. Der Schnitt
IX-IX in Figur 8 ist in der Figur 9 gezeigt.

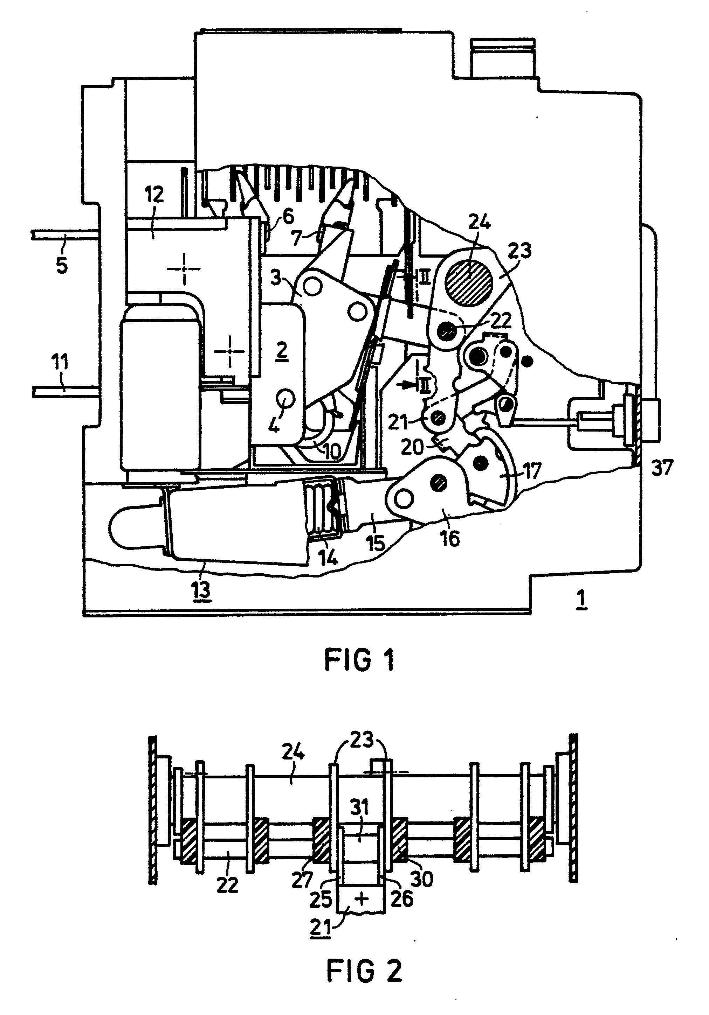

Der in der Figur 1 gezeigte Niederspannungs-Leistungsschalter 1 enthält eine Kontaktanordnung 2,
deren beweglicher Teil 3 um ein ortsfestes Lager 4
schwenkbar ist. Die Kontaktanordnung 2 ist im geöffneten Zustand dargestellt; wird sie geschlossen,
so wird eine geschlossene Strombahn gebildet, die
sich von einem oberen Anschlußleiter 5 über ein
feststehendes Schaltstück 6, ein an dem beweglichen Teil 3 der Kontaktanordnung befindliches
Schaltstück 7 sowie ein biegsames Stromband 10 zu
einem unteren Anschlußleiter 11 erstreckt. Unterhalb der an einem isolierenden Träger 12 angebrachten Kontaktanordnung 2 befindet sich ein Federspeicher 13, der die Schaltenergie zum Einschalten
des Leistungsschalters 1 bereitstellt. Mit Rücksicht
darauf, daß Leistungsschalter dieser Art in der Regel mehrpolig, d. h. drei- oder vierpolig ausgebildet
sind und daß beim Einschalten auf einen Kurzschluß
starke abstoßende Kräfte überwunden werden müssen, ist der Energiebedarf des Leistungsschalters
groß.

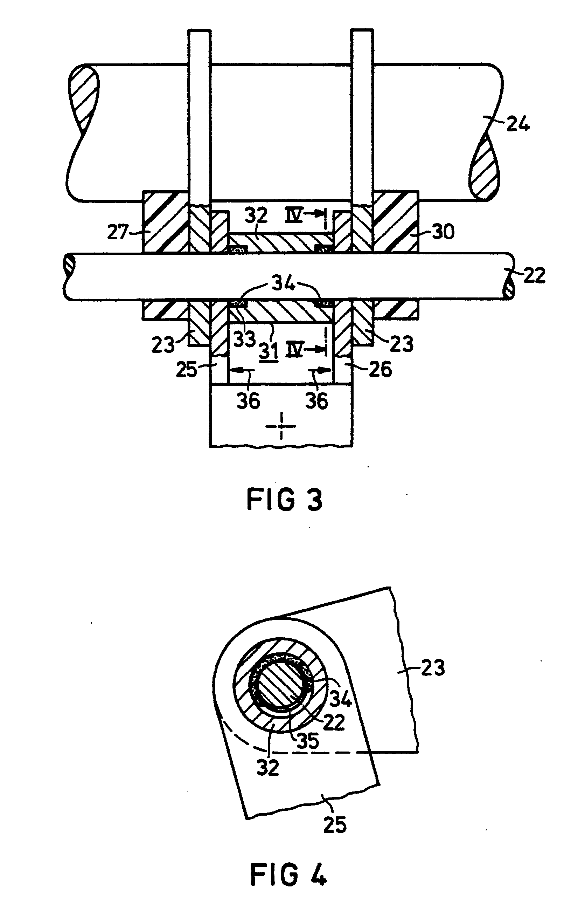

In der Figur 1 ist der Federspeicher 13 im gespannten Zustand gezeigt. In dem Federspeicher
enthaltene Druckfedern 14 wirken über eine
Schubstange 15 auf einen Mitnehmer 16, der mit einem unteren Kniehebel 17 einer mehrgliedrigen Hebelanordnung zusammenwirkt. Hierzu gehören ein
an den Kniehebel 17 anschließender mittlerer Kniehebel 20 sowie ein als Schubhebel wirkender oberer
Kniehebel 21, der mittels eines Lagerbolzens 22 mit
einem Treibhebel 23 verbunden ist, der auf einer
Schaltwelle 24 befestigt ist. Wie die Figur 2 zeigt,
sind auf der Schaltwelle 24 drei Paare von Treibhebeln 23 angebracht, die zur Betätigung von drei nebeneinander angeordneten Kontaktanordnungen 2
vorgesehen sind. Der Lagerbolzen 22 überträgt somit die gesamte zum Schalten benötigte mechanische Energie. Wie die Figur 2 ferner zeigt, wird der
obere Kniehebel 21 durch Teilhebel 25 und 26 gebildet, die an den einander zugewandten Seiten zweier
Treibhebel 23 anliegen. An den abgewandten Seiten
der Treibhebel 23 liegen Koppelorgane 27 und 30
an, die zur Weiterleitung der Antriebsenergie zu
der in der Figur 1 gezeigten mittleren Kontaktanordnung 3 dienen. Die nähere Ausgestaltung der Hebelanordnung im Bereich des Lagerbolzens 22 ist
der Figur 3 zu entnehmen.

Wie die Figur 3 zeigt, befindet sich zwischen den
Teilhebeln 25 und 26 des oberen Kniehebels 21 eine
Buchse 31, deren Länge dem Abstand der Teilhebel
25 und 26 angepaßt ist und diese Hebel somit gegeneinander abstützt und deren Verkantung unter dem
Einfluß der starken Kräfte verhindert. Die Teilhebel
25 und 26 liegen ihrerseits an den Treibhebeln 23
der Schaltwelle 24 an. Der mittlere Teil 32 der Buchse 31 ist dem Durchmesser des Lagerbolzens 22 angepaßt. Nahe den Enden ist der Innendurchmesser
der Lagerbuchse 31 durch Ausdrehungen 33 zu jeweils einem als Vorratsraum dienenden einem
Ringraum erweitert, in dem sich ein Schmierstoff 34
mit möglichst hoher Zähigkeit befindet.

*Bei der Freigabe des Federspeichers 13 mittels*
einer nicht dargestellten Einschaltverklinkung wird
die anhand der Figur 1 erläuterte Kniehebelanordnung gestreckt, wodurch über den Lagerbolzen 22
die Schaltwelle 24 mit den daraufsitzenden Treibhebeln 23 ruckartig geschwenkt wird. Der Schwenkwinkel ist hierbei verhältnismäßig gering und kann im
Bereich von 50 bis 60° liegen. Die Teilhebel 25 und
26 liegen dabei mit ihren Lageröffnungen, von denen eine Lageröffnung 35 in der Figur 4 gezeigt ist
an der einen Seite des Lagerbolzens 22 an. Gelangt
die Anordnung nun in ihre Endstellung, so unterliegt
der Schmierstoff 34 aufgrund seiner Massenträgheit einer Beschleunigung, die ausreicht, die Zähigkeit des Schmierstoffes zu überwinden und ihn in
den während der vorangegangenen Bewegung unbeansprucht gebliebenen Teil des Lagerspaltes zu
fördern. Dies ist in der Figur 4 durch Pfeile 36 angedeutet. Auch kann eine durch die plötzliche Abbremsung der Teile verursachte Vibration oder
Prellung dazu beitragen, den Schmierstoff in den
Lagerspalt zu verteilen.

Beim Ausschalten wird die beschriebene
Schwenkbewegung in der umgekehrten Richtung
ausgeführt. Hierzu wird mittels einer Drucktaste 37
(Figur 1) die Ausschaltverklinkung gelöst, wodurch
in bekannter Weise der gestreckten Kniehebelanordnung die Abstützung entzogen wird. Die Schaltwelle 24 mit den daraufsitzenden Treibhebel 23
schwenkt nun entgegen dem Uhrzeigersinn in die in
der Figur 1 gezeigte Stellung zurück. Die Energie
zur Durchführung dieser Bewegung liefern nun Federn, die in bekannter Weise Bestandteil der Kontaktanordnungen 2 sind und die während der vorangegangenen Einschaltung des Leistungsschalters 1
gespannt wurden. Im Laufe dieser Ausschaltbewegung wird nun die gegenüberliegende Seite des Lagerbolzens 22 beansprucht, auf der jedoch zuvor
in der erläuterten Weise aus den Ringräumen 33 der
Buchse 31 Schmierstoff abgelagert wurde. Hierdurch wird der Verschleiß in der erwünschten Weise gering gehalten.

Wie man bei der Betrachtung der Anordnung gemäß den Figuren 3 und 4 erkennt, werden die hochbeanspruchten Flächen periodisch mit frischem
Schmierstoff versorgt, da am Ende jedes Bewegungsvorganges eine zum Transport des Schmierstoffes ausreichende Beschleunigung auftritt. Es
sind daher Schmierstoffe mit hoher Zähigkeit anwendbar, die bei normaler Anwendung aufgrund ihres zu geringen Fließvermögens keine ausreichende Benetzung von Lagerflächen ergeben würden.
Gerade solche Schmierstoffe sind jedoch gut geeignet Lagerflächen zu schützen, die bei geringer Relativbewegung einer großen spezifischen Beanspruchung ausgesetzt sind.

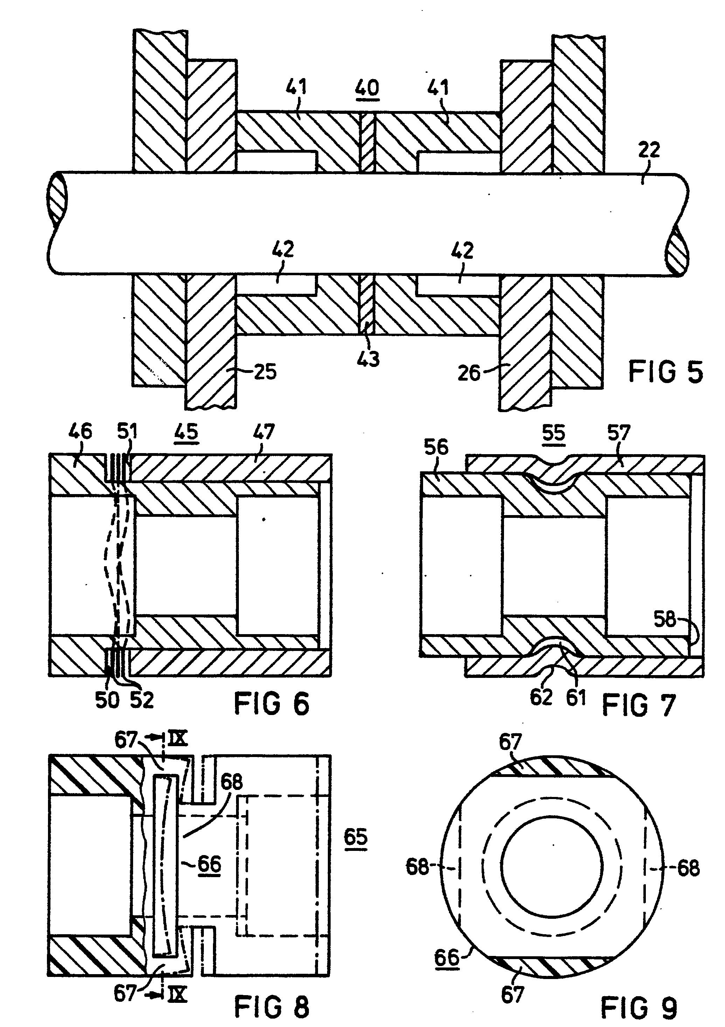

Im folgenden werden Ausführungsbeispiele von
Buchsen beschrieben, die es gestatten, unabhängig
von einer Toleranz des Abstandes der Teilhebel 25
und 26 und der Buchse ein möglichst spielfreies Anliegen der Stirnflächen der Buchse zu erzielen und
damit der Anordnung zur besten Wirksamkeit zu
verhelfen. Hierzu zeigt die Figur 5 in einer etwa der
Figur 3 entsprechenden Darstellung die Teilhebel
25 und 26 sowie den Lagerbolzen 22 und eine zwischen den Teilhebeln angeordnete Buchse 40. Diese ist aus zwei gleichen Teilstücken 41 zusammengesetzt, die jeweils einen Vorratsraum 42 für das Schmiermittel besitzen. Die Gesamtlänge beider Teilstücke 41 ist bewußt geringer als der Abstand der Teilhebel 25 und 26 bemessen, so daß durch Einlegen üblicher Scheiben 43 entsprechend der jeweils gegebenen Toleranz ein dichtes Anliegen der Stirnflächen der Teilstücke 41 an den Teilhebeln 25 und 26 erzielt wird.

In der Figur 6 ist nur eine Buchse 45 ohne die angrenzenden Teile gezeigt. Die Buchse 45 ist aus zwei ineinandergreifend und relativ zueinander axial verschiebbaren Teilstücken 46 und 47 zusammengesetzt. Das Teilstück 46 enthält dabei die beiden Vorratsräume für das Schmiermittel, während das Teilstück 47 einen auf dem Teilstück 46 verschiebbaren zylindrischen Mantel bildet. Zwischen die einander gegenüberstehenden Ringflächen 50 und 51 der Teilstücke 46 und 47 sind mehrere axial wirkende Federelemente 52 eingefügt, z. B. Tellerfedern oder gewellte Federscheiben. Beim Einbau in die Hebelanordnung gemäß den Figuren 2 oder 3 liegen aufgrund dieser Federung die Endflächen der Teilstücke 46 und 47 an den Teilhebeln 25 und 26 mit einer gewissen Vorspannung an.

Eine genaue Anpassung der Buchse an den Abstand der Teilhebel ist aber auch ohne Unterteilung in Teilstücke oder zusätzliche Scheiben bzw. Federelemente durch eine einstückige Ausführung gemäß der Figur 7 zu erreichen. Diese weist ein Innenteil 56 auf, welches im wesentlichen etwa der Buchse 31 in Figur 3 entspricht, dieser gegenüber jedoch verkürzt ausgeführt ist. Das Innenteil 56 ist mit einem Mantelteil 57 versehen, das über die eine Endfläche 58 des Innenteiles 56 übersteht. Etwa in der Mitte ist das Innenteil 56 mit einer Eindrehung 61 versehen. In diese greift ein deformierbarer Bereich 62 des Mantelteiles 57 ein, der, falls gewünscht, auch durch Stellen verringerten Querschnittes oder Ausnehmungen gebildet sein kann. Auf diese Weise ist durch Einwirkung einer radial gerichteten Kraft auf den Bereich 62 des Mantelteiles 57 eine bleibende Verformung zu erreichen, wodurch das Material des Mantelteiles 57 in die Eindrehung 61 hineingedrückt wird. Das Innenteil 56 und das Mantelteil 57 werden dadurch in gewünschter Stellung verbunden und ergeben eine Buchse mit geeigneter Länge.

Eine federnde Anlage der Buchse an den Teilhebeln ist auch nach der Ausführungsform erzielbar, wie sie in den Figuren 8 und 9 dargestellt ist. Im Unterschied zu den zuvor beschriebenen Buchsen ist die hier gezeigte Buchse 65 einstückig aus einem geeigneten Kunststoff, insbesondere einem thermoplastischen Kunststoff hergestellt und weist einen mittleren federnd veformbaren Bereich auf. Dieser ist, wie der in der Figur 9 gezeigte Schnitt IX-IX zeigt, als federnde Verbindungsscheibe 66 ausgebildet, die durch je zwei auf gegenüberliegenden Seiten angeordnete Stege 67 bzw. 68 mit den anschließenden Teilkörpern der Buchse 65 verbunden ist.

Eine bei dem Einbau der Buchse 65 in eine Hebelanordnung entsprechend den Figuren 2 oder auftretende Verformung ist in der Figur 8 durch strichpunktierte Linien schematisch dargestellt.

## Patentansprüche

1. Gelenkige Hebelanordnung zwischen der Antriebsvorrichtung eines Niederspannungs-Leistungsschalters (1) und dessen Kontaktanordnung (2) zur Übertragung begrenzter Schwenkbewegungen mit wechselnder Richtung, mit wenigstens einem Lagerbolzen (22) und einem mit einer Lageröffnung (35) für den Lagerbolzen versehenen Hebel (23, 25, 26), dadurch gekennzeichnet, daß seitlich neben der Lageröffnung (35) ein mit dem Lagerspalt zwischen dem Hebel (25, 26) und dem Lagerbolzen (22) in Verbindung stehender Vorratsraum (33) zur Aufnahme eines hochzähen Schmierstoffes (34) angeordnet ist.

2. Gelenkige Hebelanordnung nach Anspruch 1, dadurch gekennzeichnet, daß der Vorratsraum (33) durch eine den Lagerbolzen (22) umgebende und an den Hebel (25, 26) angrenzende Buchse (31) gebildet ist.

3. Gelenkige Hebelanordnung nach Anspruch 2, dadurch gekennzeichnet, daß die Bohrung der Buchse (31) einen dem Durchmesser des Lagerbolzens (22) angepaßten Teil (32) sowie einen demgegenüber erweiterten Teil (33) zur Aufnahme des Schmierstoffes (34) besitzt.

4. Gelenkige Hebelanordnung nach Anspruch 2, dadurch gekennzeichnet, daß die Buchse (31) als Abstandsglied zwischen paarweise angeordneten Hebeln (25, 26) ausgebildet ist.

5. Gelenkige Hebelanordnung nach Anspruch 1, dadurch gekennzeichnet, daß der Lagerbolzen (22) als Verbindungselement zur Kraftübertragung zwischen zwei auf einer Schaltwelle (24) sitzenden Treibhebeln (23), zwei durch einen Federspeicher (13) beaufschlagten Teilhebeln (25, 26) eines Schubhebels (21) und zwei mit der Kontaktanordnung (2) des Niederspannungs-Leistungsschalters (1) verbundenen Koppelorganen (27, 30) ausgebildet ist und daß die Buchse (31) entsprechend dem Abstand der Teilhebel (25, 26) bemessen und diese an den Treibhebeln (23) anliegend angeordnet sind.

6. Gelenkige Hebelanordnung nach Anspruch 1, dadurch gekennzeichnet, daß der Vorratsraum für den Schmierstoff (34) radial neben der Lageröffnung des Hebels in Gestalt einer in die Lageröffnung mündenden Bohrung angeordnet ist.

7. Gelenkige Hebelanordnung nach Anspruch 6, dadurch gekennzeichnet, daß bei einem Hebel mit zwei Lageröffnungen die Bohrung beide Lageröffnungen verbindend angeordnet ist.

8. Gelenkige Hebelanordnung nach Anspruch 5, dadurch gekennzeichnet, daß die Buchse (40) aus zwei Teilstücken (41) besteht, die jeweils einen an die Teilhebel (25, 26) angrenzenden Vorratsraum (42) besitzen und daß die Gesamtlänge beider Teilstücke (41) zwecks maßgerechter Anpassung an den Abstand der Teilhebel (25, 26) durch Zwischenlage von Scheiben (43) geringer als der Abstand der Teilhebel (25, 26) bemessen ist.

9. Gelenkige Hebelanordnung nach Anspruch 5, dadurch gekennzeichnet, daß die Buchse (45) aus zwei ineinandergreifend und relativ zueinander axial verschiebbaren Teilstücken (46, 47) zusammengesetzt ist und daß zwischen zwei einander gegenüberstehend angeordneten Ringflächen (50, 51) der Teilstücke (46, 47) wenigstens ein axial wirkendes Federelement (52) angeordnet ist.

10. Gelenkige Hebelanordnung nach Anspruch 5, dadurch gekennzeichnet, daß die Buchse (55) ein Innenteil (56) mit einer etwa mittig am Umfang vorgesehenen Eindrehung (61) und ein über die eine Endfläche (58) des Innenteiles überstehendes Mantelteil (57) besitzt, das einen radial bleibend deformierbaren Bereich (62) besitzt.

11. Gelenkige Hebelanordnung nach Anspruch 5, dadurch gekennzeichnet, daß die Buchse (65) bei einstückiger Herstellung aus einem Kunststoff einen etwa mittig angeordneten axial federnd deformierbaren Bereich (66) besitzt.

## Claims

1. An articulated lever arrangement between the drive of a low-voltage circuit breaker (1) and its contact arrangement (2) for the transmission of limited pivoting movements in alternate directions, having at least one bearing pin (22) and a lever (23, 25, 26) provided with a bearing opening (35) for the bearing pin, characterised in that arranged laterally next to the bearing opening (35) is a supply chamber (33), for receiving a highly viscous lubricant (34), which is connected to the bearing gap between the lever (25, 26) and the bearing pin (22).

2. An articulated lever arrangement according to claim 1, characterised in that the supply chamber (33) is formed by a bush (31) surrounding the bearing pin (22) and adjacent to the lever (25, 26).

3. An articulated lever arrangement according to claim 2, characterised in that the bore in the bush (31) has a part (32) adapted to the diameter of the bearing pin (22) and a part (33) widened relative thereto for receiving the lubricant (34).

4. An articulated lever arrangement according to claim 2, characterised in that the bush (31) is formed as a spacer member between levers (25, 26) arranged in pairs.

5. An articulated lever arrangement according to claim 1, characterised in that the bearing pin (22) is formed as a connecting element for transmitting force between two driving levers (23) seated on an actuating shaft (24), two partial levers (25, 26) of a push lever (21) urged by a spring energy store (13) and two coupling members (27, 30) connected to the contact arrangement (2) of the low-voltage circuit breaker (1), and that the dimensions of the bush (31) correspond to the distance between the partial levers (25, 26) which are arranged so that they adjoin the driving levers (23).

6. An articulated lever arrangement according to claim 1, characterised in that the supply chamber for the lubricant (34) is arranged radially next to the bearing opening of the lever in the form of a bore opening into the bearing opening.

7. An articulated lever arrangement according to claim 6, characterised in that in the case of a lever having two bearing openings, the bore is arranged so that it connects the two bearing openings.

8. An articulated lever arrangement according to claim 5, characterised in that the bush (40) comprises two parts (41) each having a supply chamber (42) adjoining the partial levers (25, 26), and that the overall length of the two parts (41) is less than the distance between the partial levers (25, 26), so that discs (43) can be interposed for accurate adaptation to the distance between the partial levers (25, 26).

9. An articulated lever arrangement according to claim 5, characterised in that the bush (45) consists of two parts (46, 47) engaging one within the other and being axially displaceable relative to one another, and that arranged between two opposed annular surfaces (50, 51) of the parts (46, 47) is at least one axially acting spring element (52).

10. An articulated lever arrangement according to claim 5, characterised in that the bush (55) has a recess (61) provided approximately centrally on its periphery and a jacket part (57) projecting beyond one end face (58) of the inner part which has a radial, permanently deformable region (62).

11. An articulated lever arrangement according to claim 5, characterised in that the bush (65), when made in one piece of a plastics material, has an axially resilient deformable region (66) arranged approximately centrally.

## Revendications

1. Dispositif articulé à leviers monté entre le dispositif d'entraînement d'un interrupteur de puissance basse tension (1) et son dispositif à contacts (2) pour la transmission de mouvements limités de pivotement dans des directions alternées, et comportant au moins un axe de support (22) et un levier (23, 25, 26) comportant une ouverture (35) formant palier pour l'axe de support, caractérisé par le fait qu'une cavité formant réservoir (33), qui est reliée à la fente de palier présente entre le levier (25, 26) et l'axe de support (22) et sert à recevoir un lubrifiant très visqueux (33), est disposée latéralement à côté de l'ouverture formant palier (35).

2. Dispositif articulé à leviers suivant la revendication 1, caractérisé par le fait que la cavité formant réservoir (33) est formée par un manchon (31) entourant l'axe de support (22) et contigu au levier (25, 26).

3. Dispositif articulé à leviers suivant la revendication 2, caractérisé par le fait que l'alésage du manchon (31) possède une partie (32) adaptée au diamètre de l'axe de support (22) ainsi qu'une partie (33), élargie par rapport à la précédente et servant à loger le lubrifiant (34).

4. Dispositif articulé à leviers suivant la revendication 2, caractérisé par le fait que le manchon (31) est réalisé sous la forme d'une entretoise disposée entre des leviers (25, 26) montés par couples.

5. Dispositif articulé à leviers selon la revendication 1, caractérisé par le fait que l'axe de support (22) est agencé sous la forme d'un élément de liaison servant à transmettre les forces entre deux leviers d'entraînement (23) montés sur un arbre de commutation (23), deux leviers partiels (25, 26) faisant partie d'un levier de poussée (21) et chargés par un accumulateur d'énergie à ressort (13), et deux organes d'accouplement (27, 30) reliés au dispositif à contacts (2) de l'interrupteur de puissance basse tension (1), et que le manchon (31) est dimensionné en fonction de la distance entre les leviers partiels (25, 26), et que ces derniers sont disposés de manière à être appliqués contre les leviers d'entraînement (23).

6. Dispositif articulé à leviers suivant la revendication 1, caractérisé par le fait que la cavité formant réservoir pour le lubrifiant (34) est disposée radialement à côté de l'ouverture formant palier pour le levier, sous la forme d'un perçage débouchant dans cette ouverture.

7. Dispositif articulé à leviers suivant la revendication 6, caractérisé par le fait que dans le cas d'un levier comportant deux ouvertures formant paliers, les alésages de ces deux ouvertures sont reliés entre eux.

8. Dispositif articulé à leviers suivant la revendication 5, caractérisé par le fait que le manchon (40) est constitué par deux éléments partiels (41), qui possèdent respectivement une cavité formant réservoir (42) jouxtant les leviers partiels (25, 26), et que la longueur totale des deux éléments partiels (41) est réglée à une valeur inférieure à la distance entre les leviers partiels (25, 26), moyennant l'interposition de rondelles (43), en vue d'obtenir une adaptation, correcte du point de vue des cotes, à la distance entre les leviers partiels (25, 26).

9. Dispositif articulé à leviers suivant la revendication 5, caractérisé par le fait que le manchon (45) est formé par la réunion de deux éléments partiels (46, 47), qui sont imbriqués l'un dans l'autre et sont déplaçables axialement l'un par rapport à l'autre, et qu'au moins l'élément de ressort (52) agissant axialement est disposé entre deux surfaces annulaires (50, 51), situées en vis-à-vis, des éléments partiels (46, 47).

10. Dispositif articulé à levier suivant la revendication 5, caractérisé par le fait que le manchon (55) possède une partie intérieure (56) dans laquelle est ménagée une gorge (21) formée au tour et prévue en position approximativement centrale sur la périphérie, et une partie formant enveloppe (57), qui fait saillie au-delà d'une surface d'extrémité (58) de la partie intérieure et possède une zone (62) déformable radialement dans un état permanent.

11. Dispositif articulé à leviers suivant la revendication 5, caractérisé par le fait que dans le cas d'une fabrication d'un seul tenant à partir d'une matière plastique, le manchon (65) possède une zone (66) située approximativement en position centrale et pouvant être déformée élastiquement dans la direction axiale.

FIG 1

FIG 2

FIG 3

FIG 4

FIG 5

FIG 6

FIG 7

FIG 8

FIG 9